# EUROPÄISCHE PATENTANMELDUNG

(11) **EP 3 301 858 A1**
(43) Veröffentlichungstag der Anmeldung: **04.04.2018**
(21) Anmeldenummer: 16191824.8
(22) Anmeldetag: 30.09.2016
(51) Int. Cl.: H04L 12/40, H04L 12/24, H04L 12/28

(54) **VERFAHREN UND ANTRIEBSVORRICHTUNG**

(71) Anmelder: Siemens Aktiengesellschaft, 80333 München (DE)
(72) Erfinder: Extra, Johannes, 91058 Erlangen (DE)

(57) **Zusammenfassung**

Die Erfindung betrifft ein Verfahren zur Trennung oder Verbindung von Antriebskomponenten (SE1, SE2, U, AS, ET) und eine Antriebsvorrichtung. Zur Verbindung der Antriebskomponenten (SE1, SE2, AS, U, ET) dient eine Netzwerkverbindung (N1, N2, N3). Ein Anwendungsschalter (AP) dient zur Verbindung oder Trennung einer Netzwerkverbindung (N1, N2, N). Der Anwendungsschalter (AP) ist von einer der Antriebskomponenten (SE1, SE2, AS, U, ET) ansteuerbar. Hierdurch kann, ausgehend von der jeweiligen Antriebskomponente (SE1, SE2, AS, U, ET) eine Netzwerkverbindung (N1, N2, N) automatisch verbunden oder getrennt werden. Das Signal zur Trennung oder Verbindung der Netzwerkverbindung (N1, N2, N) zwischen jeweils zwei Antriebskomponenten (SE1, SE2, AS, U, ET) wird vorzugsweise durch eine Signalverbindung (SV) oder die Netzwerkverbindung (N1, N2, N) dem Anwendungsschalter (AP) bereitgestellt. Vorteilhaft müssen Netzwerkverbindungen (N1, N2, N) nicht mehr händisch verbunden oder getrennt werden.

## Beschreibung

Die Erfindung betrifft ein Verfahren zur Trennung oder Verbindung von Antriebskomponenten und eine Antriebsvorrichtung.

Gewöhnlich werden Antriebskomponenten über eine Netzwerkverbindung verbunden. Unter einer Antriebskomponente wird beispielhaft eine Steuereinrichtung, eine Antriebssteuerung, eine Bewegungssteuerung, eine Speicherprogrammierbare Steuerung, oder ein Umrichter (Stromrichter bzw. Frequenzumrichter) verstanden. Die Netzwerkverbindung dient zum Austausch von Daten oder sonstigen Signalen. Gewöhnlich erfolgt eine solche Netzwerkverbindung über eine TCP/IP Kommunikation.

Zur Verbindung von Antriebskomponenten werden oft PROFINET, EtherCAT oder andere spezielle Typen von Netzwerkverbindungen eingesetzt.

Zur Trennung einer solchen Verbindung ist regelmäßig eine händische Trennung der Netzwerkverbindung durch Ziehen eines Verbindungskabels notwendig. Eine Verbindung der Netzwerkverbindung erfolgt ebenfalls meist händisch durch das Stecken eines Kabels.

Aufgabe der Erfindung ist es, die Konnektivität in einer Antriebsvorrichtung zu vereinfachen.

Zur Lösung der Aufgabe dient ein Verfahren nach Anspruch 1.

Die Aufgabe wird weiter durch eine Antriebsvorrichtung gemäß Anspruch 10 gelöst.

Zudem wird die Aufgabe durch eine Schalteinheit gemäß Anspruch 15 gelöst.

Vorteilhafte Ausgestaltungen sind Gegenstand der abhängigen Ansprüche.

Beispiele für Antriebskomponenten sind eine Steuereinrichtung, eine Bewegungssteuerung, eine Speicherprogrammierbare Steuerung, Umrichter, und/oder eine Antriebssteuerung. Die Antriebskomponenten sind jeweils durch eine Netzwerkverbindung verbunden. Die jeweilige Netzwerkverbindung wird durch einen Anwendungsschalter verbunden und/oder getrennt. Die jeweilige Antriebskomponente steuert den Anwendungsschalter zur Verbindung und/oder Trennung der Netzwerkverbindung an.

Die Antriebsvorrichtung weist mehrere Antriebskomponenten, zumindest eine Netzwerkverbindung sowie einen Anwendungsschalter, auf, wobei die Netzwerkverbindung zur Verbindung der Antriebskomponenten vorgesehen ist, wobei der Anwendungsschalter zur Trennung und/oder Verbindung einer Netzwerkverbindung vorgesehen ist, wobei zu einer Ansteuerung des Anwendungsschalters die jeweilige Antriebskomponente ausgebildet ist.

Die Schalteinheit ist zum Trennen oder Verbinden einer Netzwerkverbindung ausgebildet. Die Trennung oder Verbindung der Netzwerkverbindung erfolgt durch ein Signal, durch eine Signalverbindung oder durch die Netzwerkverbindung. Das Signal ist zur Verbindung oder Trennung der Netzwerkverbindung vorgesehen. Im einfachsten Fall kann das Signal eine negative Flanke zur Trennung der Netzwerkverbindung und eine positive Flanke zur Verbindung der Netzwerkverbindung aufweisen.

Die Schalteinheit ist vorzugsweise für eine industrielle Netzwerkverbindung, insbesondere für das "industrial Ethernet", ausgebildet. Bevorzugt ist die Schalteinheit zur Durchführung eines hier beschriebenen Verfahrens ausgebildet.

Insbesondere ist die Schalteinheit derart ausgebildet, dass einstellbar ist, welche Antriebskomponente zur Verbindung oder Trennung der Netzwerkverbindung vorgesehen ist. Zur Verbindung oder Trennung umfasst die Schalteinheit einen oder mehrere Anwendungsschalter. Die Schalteinheit weist Eingänge für Netzwerkverbindungen auf. Die Anwendungsschalter dienen jeweils zur Verbindung oder zur Trennung jeweils zwei eingehender Netzwerkverbindungen. Ein Anwendungsschalter kann auch zur Umschaltung von einer eingehenden Netzwerkverbindung zu einer anderen ausgehenden Netzwerkverbindung ausgebildet sein.

Eine Antriebsvorrichtung umfasst gewöhnlich Antriebskomponenten wie eine Bewegungssteuerung, eine Speicherprogrammierbare Steuerung, Stromrichter bzw. Umrichter und/oder einen Geber.

Die jeweilige Antriebskomponente weist einen Netzwerkanschluss zur Verbindung mit anderen Antriebskomponenten oder einer Schalteinheit auf.

Unter einer Netzwerkverbindung wird insbesondere eine Ethernet-Netzwerkverbindung oder ein Feldbus für industrielle Standards wie PROFIBUS, EtherCAT, DriveCLiQ oder ähnliches verstanden. Die Netzwerkverbindung ist vorteilhaft als Feldbus, insbesondere in einer BUS-Architektur, ausgeführt.

Obgleich ein wichtiges Anwendungsgebiet der hier beschriebenen Erfindung Netzwerkverbindungen von industriellen Netzwerkverbindungen (industrial Ethernet) sind, kann die Erfindung auch bei der Verbindung gewöhnlicher Recheneinheiten wie Personal-Computer angewendet werden.

Die Netzwerkverbindung kann mehrere Ebenen aufweisen. Vorzugsweise gibt es ein übergeordnetes Netzwerk und ein Netzwerk, welches einzelne Antriebskomponenten verbindet.

Ein Anwendungsschalter weist vorzugsweise jeweils einen Eingang und einen Ausgang einer Netzwerkverbindung auf. Optional kann der Anwendungsschalter einen Eingang für eine Signalverbindung aufweisen.

Der Anwendungsschalter dient zur Trennung oder zur Verbindung der jeweiligen Netzwerkverbindung. Der Anwendungsschalter funktioniert hierbei vorzugsweise analog einem Flip-Flop-Schalter (bistabile Kippstufe). Ein Signal, welches insbesondere durch die Signalverbindung oder durch die Netzwerkverbindung dem Anwendungsschalter bereitgestellt wird, verbindet die Netzwerkverbindung zwischen den jeweils angeschlossenen Antriebskomponenten. Ein weiteres Signal, insbesondere von der Signalverbindung bereitgestellt, trennt die Netzwerkverbindung.

Der Anwendungsschalter oder eine Schalteinheit kann eine eigene Einheit bilden oder auch räumlich einer Antriebskomponente zugeordnet sein. Das Signal kann ebenfalls mit Hilfe der Netzwerkverbindung dem Anwendungsschalter zugeführt werden. In diesem Fall ist die Signalverbindung in die Netzwerkverbindung integriert.

Bevorzugt ist ein Anwendungsschalter in die Schalteinheit integriert. Beispielhaft kann der Anwendungsschalter durch einen handelsüblichen Mikrocomputer, bevorzugt einen "Raspberry PI", ausgebildet sein.

Das Signal wird von jeweils einer Antriebskomponente bereitgestellt. Das Signal kann auch von mehreren Antriebskomponenten, insbesondere mit unterschiedlichen Prioritäten, bereitgestellt werden.

So kann eine erste Antriebskomponente ein Signal mit einer niedrigen Priorität bereitstellen und eine zweite Antriebskomponente kann ein Signal mit einer hohen Priorität bereitstellen. Der Anwendungsschalter orientiert sich bei Vorliegen beider Signale an dem Signal mit der jeweils höheren Priorität. Vorteilhaft kann ein Anwendungsschalter auch unterschiedliche Netzwerkverbindungen mit einer jeweiligen Priorität trennen oder verbinden. Die Priorität kann insbesondere mit Hilfe eines Mikrocomputers, der dem Anwendungsschalter zugeordnet ist, festgestellt werden.

Vorzugsweise geht das Signal von einer Antriebskomponente aus. So können die Netzwerkverbindung und/oder eine bereits bestehende Signalverbindung zur Ansteuerung des Anwendungsschalters dienen.

Durch die Erfindung kann ein aufwändiges händisches Verschalten von Netzwerkverbindungen vorteilhaft entfallen.

Bevorzugt ist die Netzwerkverbindung eine industrielle Netzwerkverbindung wie ProfiNET oder EtherCAT. Industrielle Netzwerkverbindungen weisen oft Echtzeitfähigkeit auf und sind für den industriellen Einsatzzweck optimiert.

Insbesondere Netzwerkverbindungen von Automatisierungsvorrichtungen oder Antriebsvorrichtungen in Produktionsanlagen sind händisch schwer zugänglich. Daher führt das hier beschriebene Verfahren zu einer erheblichen Erleichterung der Pflege einer Automatisierungsvorrichtung.

In einer vorteilhaften Ausgestaltung des Verfahrens ist der Anwendungsschalter durch eine Signalverbindung mit der jeweiligen Antriebskomponente verbunden. Die Signalverbindung dient zur Bereitstellung eines Signals zur Verbindung oder Trennung der jeweiligen Netzwerkverbindung.

Um die Netzwerkverbindung nicht zu überlasten, ist vorzugsweise der Anwendungsschalter mit der jeweiligen Antriebskomponente über eine, optional separat ausgestaltete, Signalverbindung verbunden. Die Signalverbindung kann auch in die Netzwerkverbindung, beispielhaft in einer freien elektrischen Verbindung, die nicht von der Netzwerkverbindung benötigt wird, integriert sein.

Durch die Signalverbindung können auch weitere Signale oder Zustände transportiert werden. Beispielhaft kann der Zustand "Verbunden"/"Getrennt" der jeweiligen Netzwerkverbindung abgefragt werden.

Die Signalverbindung kann auch als drahtlose Verbindung, z.B. als WiFi-Verbindung, ausgestaltet sein.

Durch die Signalverbindung kann ein besonders störungsresistentes Trennen/Verbinden einer Netzwerkverbindung erfolgen, ohne dass die Netzwerkverbindung modifiziert werden muss.

Bei einer weiteren vorteilhaften Ausgestaltung des Verfahrens werden die Verbindung und/oder die Trennung des Anwendungsschalters lediglich durch jeweils eine der Antriebskomponenten vorgegeben.

Die Einschränkung, dass nur ausgewählte Antriebskomponenten eines Netzwerkes oder ein sonstiger eingeschränkter Kreis von Antriebskomponenten eine Netzwerkverbindung verbinden und/oder trennen können, trägt zu einer erhöhten Sicherheit bei. Insbesondere kann aus einem weiteren Netzwerk, insbesondere einem übergeordneten Netzwerk, kein Signal zu einer Beeinträchtigung der jeweiligen Netzwerkverbindung führen.

Bei einer weiteren vorteilhaften Ausgestaltung des Verfahrens ist die Signalverbindung in zumindest eine der Netzwerkverbindungen integriert.

Die Integration der Signalverbindung in die jeweilige Netzwerkverbindung kann wie folgt ausgebildet sein:
Die Signalverbindung ist für ein Signal vorgesehen, welches als Signal oder als Befehlsdaten von einer Antriebskomponente an das Netzwerk bereitgestellt wird.

Die Befehlsdaten werden durch das Netzwerk dem Anwendungsschalter bereitgestellt. Der Anwendungsschalter trennt oder verbindet die Netzwerkverbindung anhand des Inhalts der Befehlsdaten. Vorteilhaft entfällt die Notwendigkeit der Signalverbindung durch eine Integration der Signalverbindung in die jeweilige Netzwerkverbindung.

Bevorzugt ist der Anwendungsschalter als Mikrocomputer ausgeführt, so dass ein gattungsgemäßes Netzwerksignal über die jeweilige Netzwerkverbindung die Netzwerkverbindung trennt bzw. verbindet. Für dieses Ausführungsbeispiel ist ggf. das Netzwerkprotokoll anzupassen.

Durch die Integration der Signalverbindung in die Netzwerkverbindung entfällt die zusätzliche Signalverbindung.

Bei einer weiteren vorteilhaften Ausgestaltung des Verfahrens sind die jeweilige Netzwerkverbindung und/oder die Signalverbindung echtzeitfähig.

Die Signalverbindung ist vorzugsweise so ausgestaltet, dass die jeweilige Netzwerkverbindung mit Hilfe des jeweiligen Anwendungsschalters getrennt oder verbunden werden kann. Hierbei kann die Signalverbindung auch eine Mehrzahl von Antriebskomponenten mit einer Mehrzahl von Anwendungsschaltern verbinden. Hierbei ist sicherzustellen, dass eine Netzwerkverbindung in einer bestimmten Zeit verbunden bzw. getrennt ist.

Durch die Echtzeitfähigkeit der Signalverbindung und/oder der Netzwerkverbindung kann ein störungsfreier und sicherer Betrieb des Verfahrens erreicht werden.

Bei einer weiteren vorteilhaften Ausgestaltung des Verfahrens erfolgt die Verbindung oder die Trennung der Netzwerkverbindung dann, wenn die Signalverbindung und/oder die Netzwerkverbindung über eine Übertragungskapazität verfügt.

Eine Trennung bzw. Verbindung einer Netzwerkverbindung erfolgt vorzugsweise beim Einrichten einer Automatisierungsvorrichtung. Beim Einrichten ist der Datenaustausch zwischen den Antriebskomponenten meist gering ausgeprägt. Vorzugsweise erfolgt daher eine Übertragung eines Signals an einen Anwendungsschalter zum Verbinden bzw. Trennen beim Einrichten. Die

Übertragungskapazität ist insbesondere während des Betriebs der Automatisierungsvorrichtung gering. Beim Einrichten kann der Anwendungsschalter auch Signale/Befehle für ein verzögertes Verbinden/Trennen erhalten. Die Verbindung bzw. die Trennung der jeweiligen Netzwerkverbindung erfolgt demnach zu einem späteren Zeitpunkt. Der Zeitpunkt der Verbindung/Trennung ist dem Signal oder dem Befehl beigefügt.

Durch die vorstehenden Ausführungen kann die Belastung des Netzwerkes begrenzt werden.

Bei einer weiteren vorteilhaften Ausgestaltung des Verfahrens erfolgt die Übertragung von Daten und/oder von Signalen durch die Signalverbindung und/oder durch die jeweilige Netzwerkverbindung verschlüsselt.

Hierbei dient vorzugsweise ein Verschlüsselungsprogramm, welches beim Einrichten der Antriebsvorrichtung auf der jeweiligen Antriebskomponente installiert worden ist.

Zur sicheren Übertragung von Signalen und/oder Daten kann zudem ein VPN (Virtuelles Privates Netzwerk) vorgesehen sein.

Bevorzugt kann auch eine SSL-Verbindung als Signalverbindung oder als Netzwerkverbindung vorgesehen sein.

Durch eine verschlüsselte Übertragung der Daten oder der Signale kann ein Zugriff auf das Netzwerk und/oder die Signalverbindung wirksam unterbunden werden.

Weiter können Verschlüsselungstechniken bei der Signalverbindung und/oder bei der Netzwerkverbindung zum Einsatz kommen.

Darüber hinaus sind Signaturen durch spezifische Anwenderverfahren denkbar. Die Signatur ist in einem solchen Fall dem Signal oder dem Befehl beigefügt und berechtigt zur Trennung oder zur Verbindung der jeweiligen Netzwerkverbindung. Signaturen können darüber hinaus Freigaben zur Verbindung/Trennung bestimmter Netzwerkverbindungen aufweisen.

Unter einer Verschlüsselung wird verstanden, dass der Anwendungsschalter oder die Schalteinheit einen Schlüssel aufweisen, welcher ein ankommendes verschlüsseltes Signal entschlüsseln kann.

Unter einer Signatur wird beispielhaft eine elektronische Signatur verstanden, welche dem Signal zugeordnet sein kann und vom Anwendungsschalter zum sicheren Verbinden oder Trennen der jeweiligen Netzwerkverbindung vorgesehen ist.

Bei einer weiteren vorteilhaften Ausgestaltung des Verfahrens ist ein Zustand des Anwendungsschalters mit einem Mensch-Maschine-Interface eingebbar und/oder anzeigbar.

Das Mensch-Maschine-Interface ist vorzugsweise als Monitor, als Touch-Display, als Handheld-Einrichtung oder als Tastatur bzw. Maus mit Display ausgestaltet.

Vorzugsweise wird der Zustand der Netzwerkverbindung ("Getrennt"/"Verbunden") dem Benutzer angezeigt.

Vorzugsweise weist auch ein Mensch-Maschine-Interface eine Sicherheitsfunktion wie einen Schlüsselschalter für die Trennung oder Verbindung der jeweiligen Netzwerkverbindung auf.

Insbesondere erfolgt eine Sicherung der Eingabe, so dass nur befugte Benutzer eine Netzwerkverbindung verbinden und/oder trennen können. Die Befugnis kann mittels VPN, Authentifizierung oder einem sonstigen dedizierten Kundenverfahren begründet werden.

Vorteilhaft dient zur Anzeige der Netzwerkverbindung ein bereits vorhandenes Mensch-Maschine-Interface. Beispielhaft ist ein solches Mensch-Maschine-Interface in einem Engineering-Tool der Antriebsvorrichtung integriert.

Der Einsatz von einem Mensch-Maschine-Interface erleichtert die Wechselwirkung der Antriebsvorrichtung für einen Benutzer.

Das Mensch-Maschine-Interface weist vorteilhaft einen Schlüsselschalter für die vorstehend ausgeführten sicherheitsrelevanten Möglichkeiten, z.B. Signatur, Verschlüsselung auf. Durch den Schlüsselschalter kann sichergestellt werden, dass nur ein befugter Benutzer oder eine ausgewählte Antriebskomponente eine Netzwerkverbindung trennen oder verbinden kann.

Bei einer vorteilhaften Ausgestaltung der Antriebsvorrichtung dient die jeweilige Antriebsvorrichtung zur Durchführung des hier ausgeführten Verfahrens.

Das Verfahren wird bevorzugt von den einzelnen Komponenten der Antriebsvorrichtung mit Hilfe einer Schalteinheit oder eines Anwendungsschalters durchgeführt. Somit ist die Netzwerkverbindung ohne Rückgriff auf ein übergeordnetes Netzwerk möglich. Das Antriebssystem ist als autarkes System somit nicht von der Funktion des übergeordneten Netzwerkes abhängig.

Bei einer weiteren vorteilhaften Ausgestaltung der Antriebsvorrichtung weist diese ein Mensch-Maschine-Interface (HMI) auf, wobei das Mensch-Maschine-Interface zur Anzeige und/oder Änderung des Zustandes des Anwendungsschalters vorgesehen ist.

Ein Mensch-Maschine-Interface kann als Bildschirm, als Tastatur, als Computermaus oder durch eine weitere bekannte Vorrichtung ausgebildet sein.

Bevorzugt ist eine Darstellung der (Netzwerk-) Verbindungen für den Benutzer möglich. Durch ein Mensch-Maschine-Interface ist eine solche Eingabe einfach und intuitiv möglich.

Bei einer weiteren vorteilhaften Ausgestaltung weist die Antriebsvorrichtung eine Bewegungssteuerung und eine Antriebssteuerung auf, wobei die Antriebssteuerung optional einen Umrichter aufweist.

Vorteilhaft ist die Antriebsvorrichtung als Bewegungssteuerung und/oder als Speicherprogrammierbare Steuerung ausgebildet. Der Umrichter ist weiter mit der Antriebsvorrichtung mit einer Netzwerkverbindung verbunden, insofern der Umrichter nicht in die Antriebssteuerung integriert ist.

In einer weiteren vorteilhaften Ausgestaltung weist die Antriebsvorrichtung darüber hinaus eine Schalteinheit auf, wobei die Schalteinheit einen oder mehrere Anwendungsschalter umfasst, wobei eine Mehrzahl von Antriebskomponenten mit der Schalteinheit durch jeweils eine Netzwerkverbindung verbunden ist und wobei die Schalteinheit zur Verbindung der jeweiligen Antriebskomponenten vorgesehen ist.

Mit Hilfe der Schalteinrichtung können eine Vielzahl von Antriebskomponenten definiert miteinander durch eine Netzwerkverbindung verbunden werden. Die Schalteinheit dient vorzugsweise zur Ausbildung der jeweiligen Netzwerkverbindung und optional zur Steuerung des Datenflusses zwischen den Antriebskomponenten.

Die Antriebsvorrichtung ist beispielhaft Teil einer industriellen Anlage wie einer Produktionsmaschine oder einer Werkzeugmaschine. Die Antriebsvorrichtung kann jedoch auch Teil einer Druckmaschine, einer Papiermaschine oder einer Textilmaschine sein.

Im Folgenden wird die Erfindung anhand von Figuren näher beschrieben und erläutert. Dabei sind die in den Figuren gezeigten Merkmale zu weiteren Ausführungsformen der Erfindung kombinierbar. Es zeigen
- FIG 1: eine Antriebsvorrichtung,
- FIG 2: eine weitere Antriebsvorrichtung,
- FIG 3: eine weitere Antriebsvorrichtung,
- FIG 4: eine Antriebssteuerung und ein Netzwerk sowie
- FIG 5: eine Schalteinheit mit Antriebskomponenten.

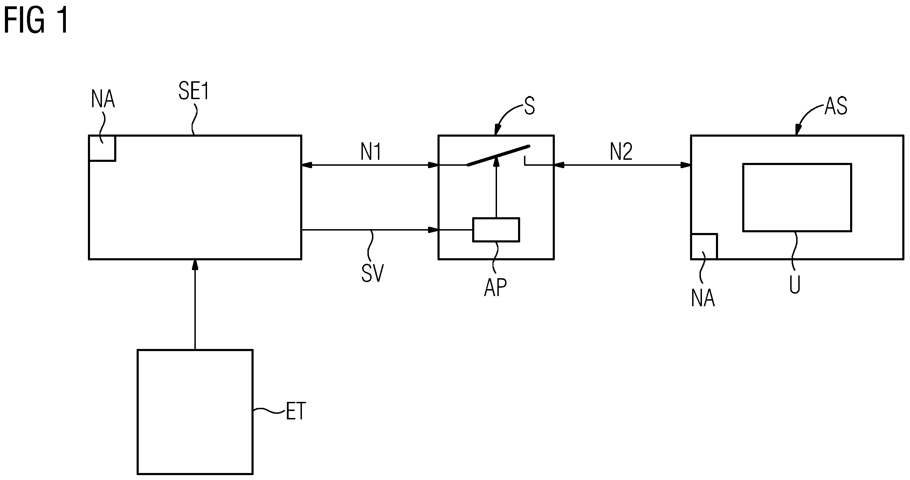

FIG 1 zeigt eine Antriebsvorrichtung. Die Antriebsvorrichtung umfasst eine Steuereinrichtung SE1 und eine Antriebssteuerung AS. Die Steuereinrichtung SE1 kann als Bewegungssteuerung, wie eine SIMOTION oder eine SIMATIC der Fa. Siemens AG, ausgebildet sein.

Die Antriebssteuerung AS kann als Speicherprogrammierbare Steuerung, auch als SPS bezeichnet, ausgebildet sein. Der Antriebssteuerung AS können weitere Umrichter U zugeordnet sein, wobei die Umrichter U zur Stromversorgung von Antrieben wie Elektromotoren (nicht dargestellt) dienen.

Die Steuereinrichtung SE1 ist mit einem Engineering-Tool ET datentechnisch verbunden. Das Engineering-Tool ET dient zur Programmierung der Steuereinrichtung SE und/oder zur Programmierung der Antriebssteuerung AS.

Im Rahmen des in FIG 1 beschriebenen Ausführungsbeispiels der Erfindung können die Antriebssteuerung AS und die Steuereinrichtung SE1 auch durch andere Antriebskomponenten ersetzt sein.

Die Steuereinrichtung SE1 und die Antriebssteuerung AS sind durch eine Netzwerkverbindung N1, N2 verbunden. Zwischen der Steuereinrichtung SE1 und der Antriebssteuerung AS ist eine Schalteinheit vorgesehen. Die Schalteinheit S umfasst einen Anschluss für die Netzwerkverbindung N1 zur Steuereinrichtung SE1 und eine Netzwerkverbindung N2 zur Antriebssteuerung AS.

Die Schalteinheit S weist einen Anwendungsschalter AS auf. Der Anwendungsschalter AS dient zur Trennung oder Verbindung der Netzwerkverbindung N1, N2.

Der Anwendungsschalter AP wird durch eine Signalverbindung SV angesteuert. Hier ist die Signalverbindung SV ausgehend von der Steuereinrichtung SE1 zur Schalteinheit S ausgebildet. Die Signalverbindung kann jedoch auch in die Netzwerkverbindung N1 integriert sein. Die Signalverbindung SV dient zur Übertragung des Signals zum Verbinden oder Trennen der Netzwerkverbindung.

Die Antriebssteuerung AS und die Steuereinrichtung SE1 weisen jeweils eine Netzwerkadresse NA auf. Die Netzwerkadresse NA eines Gerätes dient zur Kennung des jeweiligen Gerätes.

Optional (jedoch nicht gezeigt) weisen auch der Umrichter U und/oder die Schalteinheit S eine Netzwerkadresse NA auf.

Das Engineering-Tool ET oder die Steuereinrichtung SE1 dient zur Bereitstellung des Signals zum Öffnen oder Verbinden der Netzwerkverbindung N1, N2 zwischen der Steuereinrichtung SE1 und der Antriebssteuerung AS.

Das Signal wird mit Hilfe der Signalverbindung der Schalteinheit S zugeführt. Das Signal dient in der Schalteinheit S zur Ansteuerung des Anwendungsschalters AP. Der Anwendungsschalter trennt oder verbindet die Netzwerkverbindung N1, N2 zwischen der Steuereinrichtung SE1 und der Antriebssteuerung AS. Generell dient das Signal zum Trennen oder Verbinden von Antriebskomponenten bestimmter Netzwerkadressen NA.

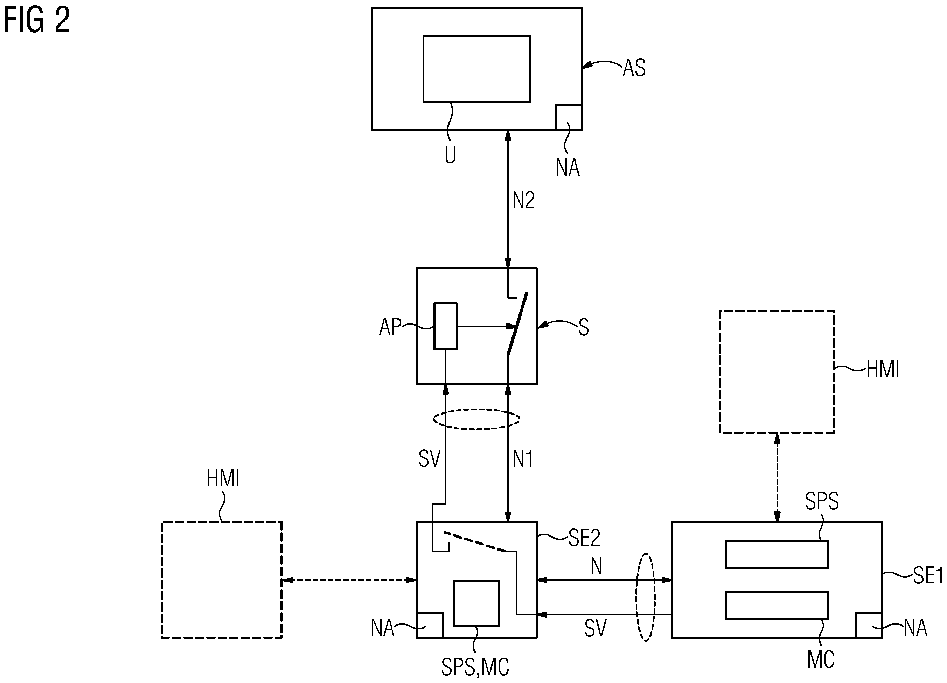

FIG 2 zeigt eine weitere Antriebsvorrichtung. Die hier gezeigte Antriebssteuerung umfasst eine erste Steuereinrichtung SE1 und eine zweite Steuereinrichtung SE2. Weiter umfasst die Antriebsvorrichtung eine Antriebssteuerung AS und eine Schalteinheit S. Der Antriebssteuerung AS ist ein Umrichter U zugeordnet. Die erste und zweite Steuereinrichtung SE1, SE2 ist jeweils optional mit einer Mensch-Maschine-Interface HMI verbunden. Die jeweils optionale Möglichkeit der Mensch-Maschinen-Interface HMI ist durch die jeweiligen gestrichelten Linien dargestellt.

Die erste Steuereinrichtung SE1 umfasst eine Bewegungskomponente MO und eine Speicherprogrammierbare Steuerung SPS. Die zweite Steuereinrichtung SE2 umfasst eine zweite Speicherprogrammierbare Steuerung SPS. Die zweite Steuereinrichtung SE2 umfasst überdies einen Schalter zur Trennung oder Verbindung der Signalverbindung SV.

Die zweite Steuereinrichtung SE2 dient zur Verbindung oder Trennung der Signalverbindung SV zwischen der ersten Steuereinrichtung SE1 und der Schalteinheit S. Die Schalteinheit S dient zur Trennung oder zur Verbindung der Netzwerkverbindung N1, N2 zwischen der zweiten Steuereinrichtung SE2 und der Antriebssteuerung AS.

Die Antriebssteuerung AS, die Steuereinrichtungen SE1, SE2 und optional der Umrichter U weisen jeweils eine Netzwerkadresse NA auf.

Mit Hilfe des jeweiligen Mensch-Maschine-Interface HMI kann ein Benutzer eine Netzwerkverbindung N0, N1, N2 und/oder eine Signalverbindung SV verbinden oder trennen.

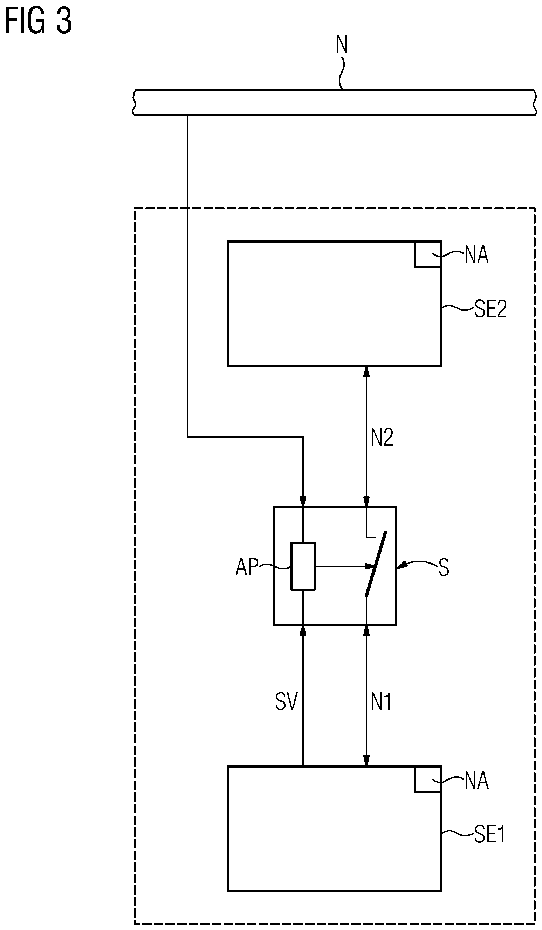

FIG 3 zeigt eine weitere Antriebsvorrichtung. Die gezeigte Antriebsvorrichtung umfasst eine erste Steuereinrichtung SE1 und eine zweite Steuereinrichtung SE2 sowie eine Schalteinheit S. Die Schalteinheit S dient zur Verbindung oder zur Trennung der Netzwerkverbindung N1, N2 zwischen der ersten und zweiten Steuereinrichtung SE1, SE2.

Die hier gezeigte Antriebsvorrichtung ist als Einheit zu verstehen, wie durch den gestrichelten Rahmen angedeutet.

Weiter zeigt die FIG 3 eine Netzwerkverbindung N. Die Netzwerkverbindung kann eine übergeordnete Netzwerkverbindung, insbesondere eine höhere Netzwerkebene, sein.

Wie schon in den anderen FIG angedeutet, dient die Schalteinheit S zum Verbinden oder Trennen der Netzwerkverbindung N1, N2 zwischen den Steuereinrichtungen SE1, SE2.

Hier ist darüber hinaus die Möglichkeit gezeigt, dass die Schalteinheit S durch ein Signal aus dem Netzwerk N angesteuert werden kann. So kann von einer beliebigen Stelle des Netzwerks die Netzwerkverbindung N1, N2 zwischen der ersten Steuereinrichtung SE1 und der zweiten Steuereinrichtung SE2 verbunden oder getrennt werden.

Die Trennung oder die Verbindung kann durch eine Adressierung der Schalteinheit S, insbesondere mit einer optional der Schalteinheit S zugewiesenen Netzwerkadresse NA, erfolgen.

Darüber hinaus kann eine Trennung oder Verbindung der Netzwerkverbindung anhand der Netzwerkadressen NE der jeweiligen Steuereinrichtung SS1, SE2 erfolgen. Hierzu ist der jeweiligen Steuereinrichtung SE1, SE2 eine Netzwerkadresse NA zugewiesen.

Insbesondere zur Erhöhung der Datensicherheit kann die jeweilige Steuereinrichtung SE1, SE2 den Zugriff des (übergeordneten) Netzwerkes N auf die Schalteinheit S verhindern oder freischalten. Daher kann die hier gezeigte Antriebsvorrichtung auch als lokales Netzwerk oder als lokale Einheit betrachtet werden.

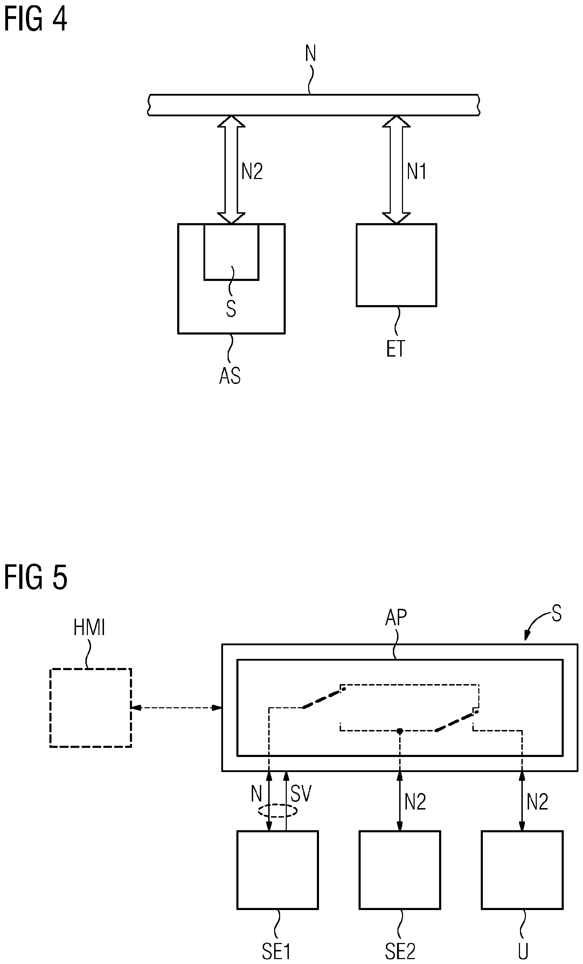

FIG 4 zeigt eine Antriebssteuerung AS und ein Netzwerk N. Das Netzwerk N kann als ein Intranet oder ein sonstiges übergeordnetes Netzwerk ausgebildet sein. Das Netzwerk N dient vorzugsweise zur Verbindung einer Vielzahl von Antriebskomponenten. Mit dem Netzwerk N ist die Antriebssteuerung AS und ein Engineering-Tool ET verbunden. Die Antriebssteuerung AS weist eine Schalteinheit S auf. Die Schalteinheit S kann durch eine Signalverbindung SV (nicht gezeigt) oder durch die Netzwerkverbindung N2 angesteuert werden. Insbesondere kann die Signalverbindung SV in die Netzwerkverbindung N, N1, N2 integriert sein.

FIG 5 zeigt eine Schalteinheit S mit Antriebskomponenten SE1, SE2, AS. Die Schalteinheit S ist mit der ersten Steuereinrichtung SE1, mit der zweiten Steuereinrichtung SE2 und mit dem Umrichter U durch jeweils eine Netzwerkverbindung N, N1, N2 verbunden. Die erste Steuereinrichtung SE1 ist darüber hinaus mit einer Signalverbindung SV mit der Schalteinheit S verbunden. Bevorzugt ist die Signalverbindung in die jeweilige Netzwerkverbindung N integriert. Die Schalteinheit S weist einen Anwendungsschalter AP auf, wobei der Anwendungsschalter AP zur Trennung oder zur Verbindung der Netzwerkverbindungen N1, N2 zwischen den Antriebskomponenten SE1, SE2, U ausgebildet ist. Durch den Anwendungsschalter AP können eine Vielzahl unterschiedlicher Verbindungen der jeweils angeschlossenen Antriebskomponenten (SE1, SE2, U) realisiert werden.

Der Datenfluss durch die jeweilige Netzwerkverbindung N, N1, N2 ist bidirektional, wie durch die Doppelpfeile angezeigt. Dies gilt auch für die Ausführungen, die in den weiteren FIG dargestellt sind.

Alternativ oder zusätzlich kann die Schalteinheit S mit einem Mensch-Maschine-Interface HMI verbunden sein. Das Mensch-Maschine-Interface HMI dient vorzugsweise als Eingabemöglichkeit der jeweiligen Verbindung/Trennung der jeweiligen Netzwerkverbindung N, N1, N2 der jeweiligen Antriebskomponenten SE1, SE2, U miteinander.

Die gezeigte Schaltung in dem Verbindungsschalter AS ist lediglich beispielhaft. Daher sind die Verbindungen gestrichelt dargestellt.

Das Mensch-Maschine-Interface HMI ist ebenfalls lediglich optional und daher gestrichelt dargestellt.

Zusammenfassend betrifft die Erfindung ein Verfahren zur Trennung und/oder Verbindung von Antriebskomponenten SE1, SE2, U, AS, ET und eine Antriebsvorrichtung. Zur Verbindung der Antriebskomponenten SE1, SE2, AS, U, ET dient eine Netzwerkverbindung N1, N2, N. Ein Anwendungsschalter AP dient zur Verbindung oder Trennung einer Netzwerkverbindung N1, N2, N. Der Anwendungsschalter AP ist von einer der Antriebskomponenten SE1, SE2, AS, U, ET ansteuerbar. Hierdurch kann, ausgehend von der jeweiligen Antriebskomponente SE1, SE2, AS, U, ET eine Netzwerkverbindung N1, N2, N automatisch verbunden oder getrennt werden. Das Signal zur Trennung oder Verbindung der Netzwerkverbindung N1, N2, N zwischen jeweils zwei Antriebskomponenten SE1, SE2, AS, U, ET wird vorzugsweise durch eine Signalverbindung SV oder die Netzwerkverbindung N1, N2, N dem Anwendungsschalter AP bereitgestellt. Vorteilhaft müssen Netzwerkverbindungen N1, N2, N nicht mehr händisch verbunden oder getrennt werden.

## Patentansprüche

1. Verfahren zur Trennung oder Verbindung von Antriebskomponenten, wobei die Antriebskomponenten (ET, SE, AS, U) durch eine Netzwerkverbindung (N1, N2, N) verbunden sind, wobei eine Netzwerkverbindung (N, N2, N) durch einen Anwendungsschalter (AP) verbunden und/oder getrennt werden kann, wobei die jeweilige Antriebskomponente (SE1, SE2, AS, ET) den Anwendungsschalter (AP) zur Verbindung und/oder Trennung der Netzwerkverbindung (N1, N2, N) ansteuert.

2. Verfahren nach Anspruch 1, wobei die Netzwerkverbindung (N, N1, N2) eine industrielle Netzwerkverbindung, insbesondere im Automatisierungsumfeld, ist.

3. Verfahren nach einem der Ansprüche 1 oder 2, wobei der Anwendungsschalter (AP) durch eine Signalverbindung (SV) mit der jeweiligen Antriebskomponente (ET, SE, AS, U) verbunden ist und die Signalverbindung (SV) ein Signal zur Verbindung oder Trennung der jeweiligen Netzwerkverbindung bereitstellt.

4. Verfahren nach Anspruch 3, wobei die Signalverbindung (SV) in zumindest eine der Netzwerkverbindungen (N1, N2, N) integriert ist.

5. Verfahren nach einem der Ansprüche 1 bis 4, wobei die Verbindung und/oder die Trennung der Netzwerkverbindung (N1, N2, N) durch den Anwendungsschalter (AP) lediglich durch jeweils eine der Antriebskomponenten (ET, SE, AS, U) vorgegeben werden.

6. Verfahren nach zumindest einem der Ansprüche 1 oder 3, wobei die jeweilige Netzwerkverbindung (N1, N2, N) und/oder die Signalverbindung (SV) echtzeitfähig sind.

7. Verfahren nach einem der vorangehenden Ansprüche, wobei die Verbindung oder die Trennung der Netzwerkverbindung (N1, N2, N) dann erfolgt, wenn die Signalverbindung (SV) und/oder die Netzwerkverbindung (N1, N2, N) über eine Übertragungskapazität verfügt.

8. Verfahren nach einem der vorangehenden Ansprüche, wobei die Übertragung von Daten und/oder Signalen durch die Signalverbindung (SV) und/oder durch die jeweilige Netzwerkverbindung (N1, N2, N3) verschlüsselt erfolgt.

9. Verfahren nach einem der vorangehenden Ansprüche, wobei ein Zustand des Anwendungsschalters (AP) mit einem Mensch-Maschine-Interface (HMI) eingebbar und/oder anzeigbar ist.

10. Antriebsvorrichtung, aufweisend mehrere Antriebskomponenten (ET, SE, AS, U), zumindest eine Netzwerkverbindung (N1, N2, N) sowie einen Anwendungsschalter (AP), wobei die Netzwerkverbindung (N1, N2, N) zur Verbindung der Antriebskomponenten (ET, SE, AS, U), insbesondere untereinander, vorgesehen ist, wobei der Anwendungsschalter (AP) zur Trennung und/oder Verbindung einer Netzwerkverbindung (N1, N2, N) vorgesehen ist, wobei die jeweilige Antriebskomponente (ET, SE1, SE2, AS, U) zu einer Ansteuerung des Anwendungsschalters (AP) ausgebildet ist.

11. Antriebsvorrichtung nach Anspruch 10, wobei die Antriebsvorrichtung zur Durchführung eines Verfahrens nach einem der Ansprüche 1 bis 9 ausgebildet ist.

12. Antriebsvorrichtung nach einem der Ansprüche 10 oder 11, weiter aufweisend ein Human-Maschine-Interface, wobei das Human-Maschine-Interface (HMI) zur Anzeige und/oder Änderung des Zustandes des Anwendungsschalters (AP) vorgesehen ist.

13. Antriebsvorrichtung nach einem der Ansprüche 10 bis 12, weiter aufweisend eine Bewegungssteuerung (SE) und eine Antriebssteuerung (AS), wobei die Antriebssteuerung optional einen Umrichter (U) aufweist.

14. Antriebsvorrichtung nach einem der Ansprüche 10 bis 13, weiter aufweisend eine Schalteinheit (S), wobei die Schalteinheit einen oder mehrere Anwendungsschalter (AP) umfasst, wobei eine Mehrzahl von Antriebskomponenten (SE1, SE2, U, ET) mit der Schalteinheit (S) durch jeweils eine Netzwerkverbindung (N1, N2, N) verbunden ist und wobei die Schalteinheit zur Verbindung der jeweiligen Antriebskomponenten (SE1, SE2, AS, U, ET) vorgesehen ist.

15. Schalteinheit (S) zum Trennen oder Verbinden einer Netzwerkverbindung (N, N1, N2), aufweisend zumindest ein Anwendungsschalter (AP), wobei der jeweilige Anwendungsschalter (AP) durch eine Signalverbindung (SV) oder durch eine Netzwerkverbindung (N, N1, N2) zur Verbindung oder Trennung der Netzwerkverbindung (N, N1, N2) ausgebildet ist.
